(19) Europäisches Patentamt
European Patent Office
Office européen des brevets

(11) **EP 3 808 818 A1**

(12) **EUROPÄISCHE PATENTANMELDUNG**

(43) Veröffentlichungstag:
**21.04.2021 Patentblatt 2021/16**

(51) Int Cl.:
***C08L 91/06*** *(2006.01)*

(21) Anmeldenummer: **19203444.5**

(22) Anmeldetag: **15.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Clariant International Ltd**
**4132 Muttenz (CH)**

(72) Erfinder:
• KRATZER, Philipp
86368 Gersthofen (DE)
• BROEHMER, Dr. Manuel
82194 Gröbenzell (DE)
• FELL, Rainer
86368 Gersthofen (DE)

(74) Vertreter: **Kuba, Stefan**
**Clariant Produkte (Deutschland) GmbH**
**IPM / Patent & License Management**
**Arabellastraße 4a**
**81925 München (DE)**

(54) **TEILVERSEIFTE REISKLEIEWACHSOXIDATE**

(57) Die Erfindung betrifft teilverseifte Reiskleiewachsoxidate, ein Verfahren zur Herstellung dieser Produkte und deren Verwendung zu land- oder forstwirtschaftlichen Zwecken, als Additiv in der Kunststoffverarbeitung, in Pflegemitteln, in Druckfarben und/oder in Lacken.

EP 3 808 818 A1

**Beschreibung**

Die Erfindung betrifft teilverseifte Reiskleiewachsoxidate, ein Verfahren zur Herstellung dieser Produkte und deren Verwendung zu land- oder forstwirtschaftlichen Zwecken, als Additiv in der Kunststoffverarbeitung, in Pflegemitteln, in Druckfarben und/oder in Lacken.

Die Oxidation von fossilen und nichtfossilen Naturwachsen mit Chromschwefelsäure ist seit Anfang des 20. Jahrhunderts bekannt und wird technisch anhand von fossilen Montanwachsen seit 1927 im heute noch betriebenen "Gersthofener Verfahren" durchgeführt. Neben fossilem Montanwachs lassen sich mit Hilfe dieser Chromsäurebasierten Verfahren auch nachwachsende Naturwachse, wie z. B. Carnaubawachs und Candelillawachs oxidieren. Ein Verfahren zur Chromsäureoxidation von Carnaubawachs wurde in 2004 durch DE-A 10231886 beschrieben. Naturbelassene Carnaubawachse (fettgrau, Typ 4; mittelgelb, primagelb und flor, Typen 3 bis 1) und Rohmontanwachs (schwarz) sind jedoch deutlich dunkel gefärbt. Die Oxidation mit Chromschwefelsäure führt zu helleren Wachsprodukten. Allerdings führt das Chromsäure-Bleichen dieser Naturwachse, in Abhängigkeit von der eingesetzten Chromsäuremenge, meist zu hohen Säurezahlen, typischerweise im Bereich von 130 bis 160 mg KOH/g.

Bei der Oxidation mit Chromsäure kommt es im Wesentlichen zu einer Spaltung der Wachsester sowie einer *in-situ*-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen im Bereich von 50-90% bezüglich der Estergruppen. Die auf diese Weise gebleichten Naturwachse besitzen zusätzlich zur gewünschten Aufhellung eine höhere Verseifungszahl und Säurezahl als die ungebleichten Wachse. Die Wachsoxidate können beispielsweise durch Veresterung der im Wachs und/oder Wachsoxidat enthaltenen Säuren mit Alkoholen weiter derivatisiert werden, um Produkte an ein gewünschtes Eigenschaftsprofil anzupassen.

Diese Veresterung wird häufig mit polyvalenten Alkoholen, wie z.B. Ethylenglykol, Butylenglykol oder Glycerin vorgenommen. Allerdings ist hiermit ein zusätzlicher Schritt verbunden, der aus prozessökonomischen Gründen nachteilig ist.

Ein wirtschaftlich interessantes Naturwachs ist Reiskleiewachs, das bei der Verarbeitung von Rohreis (oryza sativa) in großen Mengen als Nebenprodukt anfällt. Nachdem beim Dreschen der reifen Reispflanzen die an den Körnern haftenden Deckspelzen entfernt und weitere Spelzen-Bestandteile neben anderen Verunreinigungen in der Reismühle separiert wurden, enthalten die Reiskörner noch den Keimling und sind von der Silberhaut umschlossen. Keimling und Silberhaut werden in einem weiteren Verarbeitungsschritt durch Abschleifen entfernt und liefern neben dem geschliffenen Reis die Reiskleie. Die Reiskleie enthält Lipidanteile, die zum überwiegenden Teil aus fetten Ölen und zu einem geringeren Prozentsatz aus wachsartigen Komponenten bestehen. Die wachsartigen Komponenten finden sich in dem aus der Kleie durch Pressung oder Lösemittelextraktion gewonnenen Öl, aus dem sie aufgrund ihrer Schwerlöslichkeit bei niedrigen Temperaturen z.B. durch Ausfrieren isoliert werden können. Die berechnete potentielle Verfügbarkeit von Reiskleiewachs liegt nach Journal of Scientific & Industrial Research, 2005, Vol. 64, 866-882, würde man die gesamte Weltreisproduktion dazu nutzen, um neben Reisöl ebenfalls das Reiskleiewachs zu gewinnen, bei ca. 300.000 Tonnen pro Jahr.

Reiskleiewachs gehört nach Ullmann's Encyclopedia of Industrial Chemistry, 5th ed. 1996, Vol. A28, S. 117 zu einer Gruppe von Wachsen, der bisher nur lokale Bedeutung oder lediglich akademisches Interesse beigemessen wurde. Beschrieben wurde die Verwendung von Reiskleiewachs in der Kosmetik (EP-A 1343454; Bräutigam, Lexikon der kosmetischen Rohstoffe, Norderstedt 2010, S. 77), als Verarbeitungshilfsmittel in Kunststoffen (JP-A H10-007862 (1998); JP-A S60-011553 (1985); JP-A S49-090739 (1974)) sowie in Druckfarben und elektrophotographischen Tonern (JP-A 2010-020304; 2010).

Die chemische Zusammensetzung von Reiskleiewachs ist trotz zahlreicher analytischer Untersuchungen mit nicht übereinstimmenden Befunden offenbar nicht völlig geklärt. Sicher hingegen ist die Zusammensetzung des Wachskörpers aus Wachsestern.

Die Reiskleiewachs-Ester bestehen hauptsächlich aus Monoestern langkettiger, gesättigter, unverzweigter Monocarbonsäuren mit langkettigen, unverzweigten, aliphatischen Monoalkoholen (nachfolgend auch "genuine Ester" genannt). Vorherrschend sind im Säureanteil der Reiskleiewachs-Ester Behen- und Lignocerinsäure, mit den Kettenlängen C22 und C24, und im Alkoholanteil der Reiskleiewachs-Ester die Kettenlängen C26, C28, C30, C32 und C34. Daneben kann das Wachs freie Fettsäuren und weitere Bestandteile wie Squalen, Phosphorlipide und Sterylester enthalten.

Der Gehalt an Wachsestern in raffiniertem und entöltem Reiskleiewachs liegt in der Regel bei größer als 96 Gew.%. In nicht-entöltem Reiskleiewachs kann der Gehalt an Wachsestern, je nach Gehalt des Reiskleieöls, auch bei nur 50 Gew.% liegen. Weitere als "Mindermengen-Bestandteile" anzusehende variable Bestandteile des Reiskleiewachses sind die nicht näher spezifizierten "Dunkelstoffe", Squalen sowie der sogenannte "Gum-Anteil". Diese Komponenten führen meist zu einer in Farbe und Anwendbarkeit schwankenden und schwer zu reproduzierenden Produktqualität.

Als übliche Technik zur Aufhellung der braunen Reiskleiewachse gilt die klassische Bleichung mit Wasserstoffperoxid. Wasserstoffperoxid-gebleichte Reiskleiewachse sind gelblich und entsprechen in ihrem Estergehalt und in ihrer Säurezahl weitgehend den Ausgangswachsen. Solche Typen werden überwiegend als entölte und raffinierte Reiskleiewachse am Markt angeboten, zeigen jedoch, da die Mindermengen-Bestandteile im Produkt verbleiben, ebenfalls schwankende Produktqualität.

Durch Verseifung von Reiskleiewachsen und/oder deren Oxidaten ist es ebenfalls möglich, die Produkte zu derivatisieren, um beispielsweise ihre Eignung für kosmetische Anwendungen zu verbessern.

CN-A 108191602 aus 2018 beschreibt Reiskleiewachsoxidate, die aus entöltem Reiskleiewachs durch Oxidation mit Natriumdichromat hergestellt werden, mit einem mehrwertigen Alkohol verestert und anschließend verseift werden. Allerdings werden keine Produkteigenschaften genannt.

EP-A 2909273 aus 2015 offenbart Oxidationsprodukte von Reiskleiewachs, hergestellt durch Oxidation mit Chromsäure in Anwesenheit von Oxidations-Promotoren wie fluorierten Alkylsulfonsäuren, Aluminiumtrichlorid oder Salzsäure, oder unter besonders heftigem Rühren. Hierdurch werden hohe Säurezahlen angestrebt. Die Reiskleiewachsoxidate werden im Anschluss an die Oxidation verestert und dann teilverseift. In EP-A 2909274 werden Reiskleiewachsoxidate beschrieben, die vor und nach der Oxidation teilverseift werden. Auch hier werden hohe Säurezahlen erreicht.

In JP-B S36-005526 (1961) wird die Herstellung von lösemittelhaltigen Politurmassen beschrieben, in denen ein chemisch modifiziertes Wachs auf der Grundlage von Reiskleiewachs enthalten ist. Die Modifizierung erfolgt durch Oxidation von rohem Reiskleiewachs mit Chromsäure oder Dichromatsalzen. Es werden dabei Säurezahlen von 40-45 mg KOH/g erreicht. Das Reiskleiewachsoxidat kann im Anschluss an die Oxidation verseift werden. Allerdings werden auch hier keine Produkteigenschaften genannt.

Es besteht ein Bedürfnis nach einem Verfahren, um gezielt teilverseifte Reiskleiewachsoxidate mit einem hohen Anteil an unverseiften Monoestern langkettiger, gesättigter, unverzweigter Monocarbonsäuren mit langkettigen, unverzweigten, aliphatischen Monoalkoholen (genuinen Estern) darzustellen.

Es wurde nun überraschend gefunden, dass die Oxidation von Reiskleiewachs mit anschließender Verseifung mit basischen Metallsalzen zu teilverseiften Reiskleiewachsen mit einem hohen Anteil an genuinen Estern führt, ohne dass ein Veresterungsschritt in dem gesamten Verfahren notwendig ist. Diese teilverseiften Reiskleiewachsoxidate zeichnen sich insbesondere durch hohe Thermostabilität und eine helle Farbe aus.

Ein Gegenstand der Erfindung ist daher ein Verfahren zur Herstellung eines teilverseiften Reiskleiewachsoxidats (V),

umfassend die Schritte:

i) Bereitstellen eines Reiskleiewachses (R), enthaltend weniger als 20 Gew.-%, bezogen auf das Gesamtgewicht des Reiskleiewachses (R), an mehrfachen Estern gebildet aus mehrwertigen Alkoholen und aliphatischen Carbonsäuren mit 8 bis 20 Kohlenstoffatomen;

ii) Bereitstellen einer Mischung (M) aus Chromtrioxid und Schwefelsäure;

iii) Durchführen der Oxidation des Reiskleiewachses (R) durch Umsetzung des Reiskleiwachses (R) mit der Mischung (M) unter Rühren und unter Rühren bei einer Temperatur von 90 bis 150 °C, um ein Reiskleiewachsoxidat (O) zu erhalten;

iv) Beenden der Umsetzung und Ruhenlassen der in Schritt iii) erhaltenen Reaktionsmischung bis zur Trennung der organischen Phase von der wässrigen Phase;

v) Abtrennung der organischen Phase;

vi) optionales Entfernen von Rückständen enthaltend Chromverbindungen aus der organischen Phase, um das Reiskleiewachsoxidat (O) in gereinigter Form zu erhalten,

vii) optionales Wiederholen der Folge von Schritten ii) bis vi), wobei anstelle des Reiskleiewachses (R) das Reiskleiewachsoxidat (O), gegebenenfalls in gereinigter Form, eingesetzt wird,

viii) Verseifen des Reiskleiewachsoxidats (O), gegebenenfalls in gereinigter Form, durch Umsetzung mit einem basischen Salz, vorzugsweise einem basischen Metallsalz, insbesondere ausgewählt aus Alkalimetallhydroxiden und Erdalkalimetallhydroxiden,

wobei der Reaktionsmischung in den Schritten iii) bis Schritt viii), vorzugsweise in allen Schritten des gesamten Verfahren, keine Alkohol-Komponente zugegeben wird.

Bei dem in Schritt i) bereitgestellten Reiskleiewachs (R) kann es sich um ein beliebiges Reiskleiewachs handeln, sofern es einen Anteil an mehrfachen Estern, gebildet aus mehrwertigen Alkoholen und aliphatischen Carbonsäuren mit 8 bis 20 Kohlenstoffatomen, von kleiner als 20 Gew.-%, vorzugsweise kleiner als 5 Gew.-%, besonders vorzugsweise 0,1 bis 2 Gew.-%, bezogen auf das Gesamtgewicht des Reiskleiewachses (R) hat.

Der gewünschte Anteil an mehrfachen Estern gebildet aus mehrwertigen Alkoholen und aliphatischen Carbonsäuren mit 8 bis 20 Kohlenstoffatomen kann bereits in dem Reiskleiewachs im Rohzustand enthalten sein, kann allerdings auch durch eine Vorbehandlung des Reiskleiewachses eingestellt werden. Vorzugsweise ist der Anteil bereits in dem Reiskleiewachs (R) im Rohzustand enthalten. In diesem Fall ist es bevorzugt, dass das Reiskleiewachs (R) nicht vorbehandelt wird.

Sind hingegen Anteile an mehrfachen Estern, gebildet aus mehrwertigen Alkoholen und aliphatischen Carbonsäuren mit 8 bis 20 Kohlenstoffatomen, 20 Gew.-% oder höher, muss das Reiskleiewachs (R) vor der Bereitstellung in Schritt i) vorbehandelt werden. In diesem Fall ist es von Vorteil, wenn die Vorbehandlung keine Verseifung der im Reiskleiewachs (R) enthaltenen Ester umfasst.

Stattdessen ist eine Extraktion der mehrfachen Estern gebildet aus mehrwertigen Alkoholen und aliphatischen Carbonsäuren mit 8 bis 20 Kohlenstoffatomen mit einem oder mehreren organischen Lösungsmitteln bevorzugt, wobei die Extraktion durchgeführt wird, bis der gewünschte Anteil an mehrfachen Estern, gebildet aus mehrwertigen Alkoholen und aliphatischen Carbonsäuren mit 8 bis 20 Kohlenstoffatomen, von kleiner als 20 Gew.-% erreicht wird. Geeignet sind beliebige organische Lösungsmittel, die Öle und Fette lösen können, beispielsweise Ethylacetat oder Aceton, vorzugsweise Ethylacetat.

Bei den mehrfachen Estern, gebildet aus mehrwertigen Alkoholen und aliphatischen Carbonsäuren mit 8 bis 20 Kohlenstoffatomen, handelt es sich vorzugsweise um Di- und Triglyceride von aliphatischen Carbonsäuren mit 8 bis 20 Kohlenstoffatomen, insbesondere um Öle, die von Natur aus in Reiskleie enthalten sind, vor Allem um Reiskleieöl. Entsprechend kann es sich bei der Extraktion mit einem organischen Lösungsmittel um eine Entölung handeln. In diesem Fall kann der Anteil an mehrfachen Estern, gebildet aus mehrwertigen Alkoholen und aliphatischen Carbonsäuren mit 8 bis 20 Kohlenstoffatomen, von kleiner als 20 Gew.-% auch als Ölgehalt des Reiskleiewachses bezeichnet werden.

Vorzugsweise wird das Reiskleiewachs (R), unabhängig von dem Anteil an mehrfachen Estern, gebildet aus mehrwertigen Alkoholen und aliphatischen Carbonsäuren mit 8 bis 20 Kohlenstoffatomen im Rohzustand, zu keinem Zeitpunkt vor der Oxidation durch Verseifung vorbehandelt.

Die in Schritt ii) bereitgestellte Mischung (M) aus Chromtrioxid und Schwefelsäure kann eine beliebige Mischung sein, sofern diese in der Lage ist, oxidierbare Bestandteile von Reiskleiewachs zu oxidieren. Häufig werden solche Mischungen aus Chromtrioxid und Schwefelsäure auch als Chomschwefelsäure bezeichnet. Bei der Schwefelsäure handelt es sich um konzentrierte Schwefelsäure mit einem Anteil an Schwefelsäure von mindestens 90 Gew.-%, vorzugsweise mindestens 96 Gew.-%, besonders vorzugsweise mindestens 99 Gew.-%. Diese kann optional rauchende Schwefelsäure sein, also zusätzlich Schwefeltrioxid enthalten. Die Konzentration von Chromtrioxid in der Mischung (M) beträgt vorzugsweise 50 bis 200 g/L, besonders vorzugsweise 70 bis 150 g/L, ganz besonders vorzugsweise 80 bis 120 g/L.

In Schritt iii) des erfindungsgemäßen Verfahrens wird die Oxidation des Reiskleiewachses (R) durch Umsetzung des Reiskleiwachses (R) mit der Mischung (M) unter Rühren und bei einer Temperatur von 80 bis 150 °C, vorzugsweise von 90 bis 140 °C, besonders vorzugsweise von 105 bis 130 °C durchgeführt, um ein Reiskleiewachsoxidat (O) zu erhalten.

Das Gewichtsverhältnis von insgesamt eingesetztem Chromtrioxid zu eingesetztem Reiskleiewachs (R) ist vorzugsweise von 1:1 bis 3:1, insbesondere von 1,1:1 bis 3:1, besonders vorzugsweise von 1,2:1 bis 2,5:1.

Dieser Schritt kann optional in mehrere Schritte unterteilt sein. Beispielsweise kann Schritt iii) das Vorlegen der Mischung (M) und anschließendes Zugeben des Reiskleiewachses (R) umfassen. Alternativ kann Schritt iii) das Vorlegen des Reiskleiewachses (R) und anschließendes Zugeben der Mischung (M) umfassen. In diesen Fällen kann die Zugabe der jeweils zweiten Komponente (R) oder (M) zum Beispiel portionsweise, kontinuierlich oder in einer Charge erfolgen, vorzugsweise portionsweise oder kontinuierlich, besonders vorzugsweise portionsweise.

Optional kann die Temperatur des Reiskleiewachses (R) und/oder der Mischung (M) während der Zugabe von der Reaktionstemperatur abweichen und erst nach erfolgter Zugabe der zweiten Komponente auf den erforderlichen Wert von 80 bis 150 °C, vorzugsweise von 90 bis 140 °C, besonders vorzugsweise von 105 bis 130 °C eingestellt werden. Beispielsweise kann die Temperatur bei der Zugabe einen Wert von 70 bis 130 °C, vorzugsweise von 80 bis 110 °C haben. Vorzugsweise liegt das Reiskleiewachs (R) während der Zugabe in geschmolzener Form vor.

In einer Ausführungsform wird die bereitgestellte Mischung (M) aus Chromtrioxid und Schwefelsäure vorgelegt und auf eine Temperatur von 70 bis 130 °C erwärmt, und das Reiskleiewachs (R) in festem Zustand portionsweise zugegeben. Nach erfolgter Zugabe wird die Temperatur auf 80 bis 150 °C eingestellt und die Oxidation durchgeführt.

In einer anderen Ausführungsform wird die bereitgestellte Mischung (M) aus Chromtrioxid und Schwefelsäure vorgelegt und auf eine Temperatur von 70 bis 130 °C erwärmt, und das Reiskleiewachs (R) in geschmolzenem Zustand, vorzugsweise bei einer Temperatur von 70 bis 130 °C, portionsweise zugegeben. Nach erfolgter Zugabe wird die Temperatur auf 80 bis 150 °C eingestellt und die Oxidation durchgeführt.

In einer weiteren Ausführungsform wird das Reiskleiewachs (R) vorgelegt und bei einer Temperatur von 70 bis 130 °C geschmolzen, und die Mischung (M) aus Chromtrioxid und Schwefelsäure portionsweise kalt zugegeben. Nach erfolgter Zugabe wird die Temperatur auf 80 bis 150 °C eingestellt und die Oxidation durchgeführt.

In einer anderen Ausführungsform wird das Reiskleiewachs (R) vorgelegt und bei einer Temperatur von 70 bis 130 °C geschmolzen, und die Mischung (M) aus Chromtrioxid und Schwefelsäure portionsweise heiß, vorzugsweise bei einer Temperatur von 70 bis 130 °C, zugegeben. Nach erfolgter Zugabe wird die Temperatur auf 80 bis 150 °C eingestellt und die Oxidation durchgeführt.

In einer weiteren Ausführungsform werden Reiskleiewachs (R) und die Mischung (M) aus Chromtrioxid und Schwefelsäure zusammen bei Raumtemperatur vorgelegt und langsam auf eine Temperatur von 80 bis 150 °C erwärmt, und bei dieser Temperatur die Oxidation durchgeführt.

Zumindest die Oxidation bei 80 bis 150 °C, vorzugsweise auch die Zugabe des Reiskleiewachses (R) und/oder der Mischung (M) findet unter Rühren statt. Das Rühren kann hierbei auf beliebige Weise erfolgen, beispielsweise mit einem mechanisch betriebenen Rührwerk, oder einem magnetisch betriebenen Rührwerk. Vorzugsweise erfolgt das Rühren mit einem mechanisch betriebenen Rührwerk, besonders vorzugsweise mit einem mechanisch betriebenen Rührwerk umfassend einen KPG-Rührer.

Die Rührgeschwindigkeit in Schritt iii) liegt vorzugsweise in einem Bereich von 100 und 500 U/min (Umdrehungen pro Minute), besonders vorzugsweise von 120 bis 300 U/min, ganz besonders vorzugsweise von 170 bis 250 U/min, da bei einer Rührgeschwindigkeit unter 100 U/min die für die effiziente Oxidation benötigte Vermischung nicht gegeben ist und bei einer Rührgeschwindigkeit von über 500 U/min ein erhöhtes Risiko der Bildung einer nicht mehr trennbaren Emulsion besteht.

Die Oxidation des Reiskleiewachses in Schritt iii) bei der Temperatur von 90 bis 150 °C erfolgt über einen Zeitraum von 1 bis 12 Stunden, vorzugsweise von 6 bis 10 Stunden, besonders vorzugsweise von 7 bis 9 Stunden.

Außerdem ist es von Vorteil, wenn der Reaktionsmischung aus Reiskleiewachs (R) und der Mischung (M) keine Oxidationspromotoren zugesetzt werden, da diese häufig die Spaltung der Esterbindungen führen können und daher die Säurezahl in dem Reiskleiewachsoxidat (O) erhöhen können. Vorzugsweise werden daher keine Oxidationspromotoren, insbesondere keine Oxidationspromotoren wie z.B. Emulgatoren (z.B. Alkansulfonate, fluorierte Alkansulfonate), Tenside, polymere Tenside, stickstoffhaltige Kationtenside, Phasentransferkatalysatoren, Fenton Reagenzien Metallsalze, Salzsäure oder dergleichen bei der Oxidation eingesetzt.

Nach Erreichen der gewünschten Reaktionsdauer wird in Schritt iv) die Umsetzung beendet und die Reaktionsmischung bis zur Trennung der organischen Phase von der wässrigen Phase ruhen gelassen. Unter "Beenden der Umsetzung" ist zu verstehen, dass das Rühren unterbrochen und das Heizen beendet wird. Hierbei beginnt die Trennung der aufschwimmenden organischen Phase, enthaltend das Reiskleiewachsoxidat (O), von der absinkenden wässrigen Phase, enthaltend Schwefelsäure und Chromverbindungen. Optional kann die Reaktionsmischung vor dem Ruhenlassen in eine Vorrichtung überführt werden, in der nach der Trennung der organischen Phase von der wässrigen Phase eine Abtrennung der organischen Phase erleichtert wird. Ein Beispiel für eine solche Vorrichtung ist ein Scheidetrichter. Andere Vorrichtungen zu diesem Zweck sind dem Fachmann bekannt und hier anwendbar.

In Schritt v) wird die organische Phase enthaltend das Reiskleiewachsoxidat abgetrennt. Dies kann beispielsweise mittels Scheidetrichter erfolgen. Alternativ kann die aufschwimmende organische Phase mithilfe von geeigneten technischen Mitteln abgeschöpft werden. Ebenso ist ein Abgießen der organischen Phase über einen Gefäßrand möglich. Wege zur Abtrennung von organischen Phasen von wässrigen Phasen nach einer Phasenseparation sind dem Fachmann grundsätzlich bekannt und hier anwendbar.

Des Weiteren kann optional in Schritt vi) die abgetrennte organische Phase enthaltend das Reiskleiewachsoxidat weiter aufgearbeitet werden, um Rückstände enthaltend Chromverbindungen aus der organischen Phase zu entfernen und damit das Reiskleiewachsoxidat in gereinigter Form zu erhalten.

Die Aufarbeitung kann auf beliebige Weise erfolgen, die für die Trennung von polaren und/oder wasserlöslichen Substanzen von organischen Substanzen geeignet ist. Beispielsweise kann eine chromatographische Aufreinigung der organischen Phase oder eine Filtration über Kieselgel erfolgen.

Vorzugsweise erfolgt das Entfernen von Rückständen enthaltend Chromverbindungen durch Waschen der organischen Phase mit einer wässrigen Lösung von Oxalsäure und/oder Schwefelsäure.

Alternativ kann das Entfernen von Rückständen enthaltend Chromverbindungen vorzugsweise durch Waschen der organischen Phase mit Wasser erfolgen. Alternativ kann das Entfernen von Rückständen enthaltend Chromverbindungen vorzugsweise durch Zentrifugieren der organischen Phase erfolgen. Unter "Waschen" ist hierbei jeweils das Vermischen der organischen Phase mit dem jeweiligen Mittel zum Waschen und anschließende Phasentrennung entsprechend Schritten iv) und v) zu verstehen.

In einer bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser.

In einer weiteren bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem Zentrifugieren der organischen Phase.

In einer weiteren bevorzugten Ausführungsform erfolgt das Entfernen von Rückständen enthaltend Chromverbindungen durch einfaches oder mehrfaches Waschen der organischen Phase mit Wasser, gefolgt von dem Zentrifugieren der organischen Phase.

In einer besonders bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser, gefolgt von dem Zentrifugieren der organischen Phase.

Optional kann die Folge der Schritte ii) bis vi) bis zu vier Mal wiederholt werden, wobei anstelle des Reiskleiewachses (R) das Reiskleiewachsoxidat (O), gegebenenfalls in gereinigter Form, eingesetzt wird.

Vorzugsweise wird im Schritt vii) die Folge der Schritte ii) bis vi) bis zu zwei Mal wiederholt. Besonders vorzugsweise wird im Schritt vii) die Folge der Schritte ii) bis vi) höchstens einmal wiederholt. Ganz besonders vorzugsweise wird die Folge der Schritte ii) bis vi) nicht wiederholt. Wird die Folge der Schritte ii) bis vi) wiederholt, ist es von Vorteil, wenn in jeder Wiederholung die Oxidation des Reiskleiewachses in Schritt iii) bei der Temperatur von 90 bis 150 °C über einen Zeitraum von 1 bis 12 Stunden, vorzugsweise von 6 bis 10 Stunden, besonders vorzugsweise von 7 bis 9 Stunden erfolgt.

Des Weiteren ist es in diesem Fall von Vorteil, wenn bei der ersten Durchführung der Folge der Schritte ii) bis vi) das Gewichtsverhältnis von eingesetztem Chromtrioxid zu eingesetztem Reiskleiewachs (R) mindestens 0,8:1, vorzugsweise mindestens 1:1 beträgt und in jeder weiteren Wiederholung der Folge der Schritte ii) bis vi) das Gewichtsverhältnis von eingesetztem Chromtrioxid zu eingesetztem Reiskleiewachs (R) mindestens 0,4:1, vorzugsweise mindestens 0,5:1 beträgt.

Das nach dem erfindungsgemäßen Verfahren als Zwischenstufe gewonnene Reiskleiewachsoxidat (O) hat typischerweise eine Säurezahl (Gemessen nach DIN ISO 2114 von 2002) von größer als 45 mg KOH/g und kleiner als 180 mg KOH/g, oftmals von größer als 50 mg KOH/g und kleiner als 150 mg KOH/g, in einer Ausführungsform von größer als 70 mg KOH/g bis kleiner als 130 mg KOH/g.

Das Reiskleiewachsoxidat (O) wird in Schritt viii) durch Umsetzung mit einem basischen Metallsalz verseift, um ein teilverseiftes Reiskleiewachsoxidat (V) zu erhalten.

Vorzugsweise ist das basische Metallsalz ausgewählt aus der Gruppe bestehend aus Metallhydroxiden (z.B. NaOH, KOH, $Ca(OH)_2$ und $Zn(OH)_2$, etc.), Metalloxiden (z.B. CaO, etc.), Metallcarbonaten (z.B. $Na_2CO_3$, $CaCO_3$. etc.) und wässrigen Laugen (wie z.B. NaOH, KOH, etc.). Bevorzugt sind Alkalimetallhydroxide und/oder Erdalkalimetallhydroxide, insbesondere NaOH, KOH und/oder $Ca(OH)_2$.

Die Verseifung in Schritt viii) wird vorzugsweise über einen Zeitraum von 0,5 bis 10 Stunden, besonders vorzugsweise über einen Zeitraum von 1 bis 8 Stunden, ganz besonders vorzugsweise über einen Zeitraum von 2 bis 6 Stunden durchgeführt. Typische Reaktionstemperaturen liegen hierbei in dem Bereich von 90 bis 150 °C, vorzugsweise von 100 bis 140 °C, besonders vorzugsweise von 115 bis 135 °C.

Ein weiterer Gegenstand der Erfindung ist ein teilverseiftes Reiskleiewachsoxidat (V) umfassend folgende Komponenten:

a) 30 bis 85 Gew.-%, bezogen auf das Gesamtgewicht des teilverseiften Reiskleiewachsoxidats (V), genuine Ester mit 42 bis 64 Kohlenstoffatomen;
b) 0 bis 70 Gew.-%, vorzugsweise 10 bis 70 Gew.-%, bezogen auf das Gesamtgewicht des teilverseiften Reiskleiewachsoxidats (V), Salze von aliphatischen Carbonsäuren mit 8 bis 36 Kohlenstoffatomen; und
c) 0 bis 5 Gew.-%, insbesondere 0 bis 3 Gew.-%, ganz besonders bevorzugt 0 bis 1 Gew.-% bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen.

Vorzugsweise umfasst das erfindungsgemäße teilverseifte Reiskleiewachsoxidat (V) folgende Komponenten:

a) 30 bis 85 Gew.-%, bezogen auf das Gesamtgewicht des teilverseiften Reiskleiewachsoxidats (V), genuine Ester mit 42 bis 64 Kohlenstoffatomen;
b) 10 bis 40 Gew.-%, bezogen auf das Gesamtgewicht des teilverseiften Reiskleiewachsoxidats (V), Salze von aliphatischen Carbonsäuren mit 8 bis 36 Kohlenstoffatomen;
c) 0 bis 5 Gew.-%, insbesondere 0 bis 3 Gew.-%, ganz besonders bevorzugt 0 bis 1 Gew.-% bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen;
d) 5 bis 40 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;

e) 0 bis 10 Gew.-%, insbesondere 0,1 bis 5 Gew.-%, bezogen auf das Gesamtgewicht des teilverseiften Reiskleiewachsoxidats (V), freie aliphatische Alkohole mit 24 bis 36 Kohlenstoffatomen;

f) 0 bis 5 Gew.-%, insbesondere 0,1 bis 5 Gew.-%, bezogen auf das Gesamtgewicht des teilverseiften Reiskleiewachsoxidats (V), freie aliphatische Dicarbonsäuren mit 10 bis 30 Kohlenstoffatomen;

g) 0 bis 15 Gew.-%, insbesondere 0,1 bis 10 Gew.-%, bezogen auf das Gesamtgewicht des teilverseiften Reiskleiewachsoxidats (V), natürliche Bestandteile von Reiskleiewachs, die sich von a) bis f) unterscheiden.

In einer bevorzugten Ausführungsform umfasst das erfindungsgemäße teilverseifte Reiskleiewachsoxidat (V) folgende Komponenten:

a) 40 bis 85 Gew.-%, bezogen auf das Gesamtgewicht des teilverseiften Reiskleiewachsoxidats (V), genuine Ester mit 42 bis 64 Kohlenstoffatomen;

b) 10 bis 30 Gew.-%, bezogen auf das Gesamtgewicht des teilverseiften Reiskleiewachsoxidats (V), Salze von aliphatischen Carbonsäuren mit 8 bis 36 Kohlenstoffatomen;

c) 0 bis 3 Gew.-%, insbesondere 0 bis 1 Gew.-% bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen;

d) 5 bis 35 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;

e) 0 bis 7 Gew.-%, bezogen auf das Gesamtgewicht des teilverseiften Reiskleiewachsoxidats (V), freie aliphatische Alkohole mit 24 bis 36 Kohlenstoffatomen;

f) 0 bis 4 Gew.-%, bezogen auf das Gesamtgewicht des teilverseiften Reiskleiewachsoxidats (V), freie aliphatische Dicarbonsäuren mit 10 bis 30 Kohlenstoffatomen;

g) 0 bis 15 Gew.-%, bezogen auf das Gesamtgewicht des teilverseiften Reiskleiewachsoxidats (V), natürliche Bestandteile von Reiskleiewachs, die sich von a) bis f) unterscheiden.

In einer besonders bevorzugten Ausführungsform umfasst das erfindungsgemäße teilverseifte Reiskleiewachsoxidat (V) folgende Komponenten:

a) 50 bis 85 Gew.-%, bezogen auf das Gesamtgewicht des teilverseiften Reiskleiewachsoxidats (V), genuine Ester mit 42 bis 64 Kohlenstoffatomen;

b) 10 bis 20 Gew.-%, bezogen auf das Gesamtgewicht des teilverseiften Reiskleiewachsoxidats (V), Salze von aliphatischen Carbonsäuren mit 8 bis 36 Kohlenstoffatomen;

c) 0 bis 1 Gew.-%, bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen;

d) 5 bis 30 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;

e) 0 bis 5 Gew.-%, bezogen auf das Gesamtgewicht des teilverseiften Reiskleiewachsoxidats (V), freie aliphatische Alkohole mit 24 bis 36 Kohlenstoffatomen;

f) 0 bis 3 Gew.-%, bezogen auf das Gesamtgewicht des teilverseiften Reiskleiewachsoxidats (V), freie aliphatische Dicarbonsäuren mit 10 bis 30 Kohlenstoffatomen;

g) 0 bis 15 Gew.-%, insbesondere 0,1 bis 10 Gew.-%, bezogen auf das Gesamtgewicht des teilverseiften Reiskleiewachsoxidats (V), natürliche Bestandteile von Reiskleiewachs, die sich von a) bis f) unterscheiden.

Vorzugsweise ist hierbei Lignocerinsäure zu maximal 5 Gew.-%, besonders vorzugsweise maximal 3 Gew.-%, bezogen auf das Gesamtgewicht des teilverseiften Reiskleiewachsoxidats (V), in dem teilverseiften Reiskleiewachsoxidat (V) enthalten. Die Gewichtsanteile und Kettenlängenverteilungen können beispielsweise mittels Gaschromatographie gemessen werden.

Besonders bevorzugt sind teilverseifte Reiskleiewachsoxidate (V), die nach dem erfindungsgemäßen Verfahren hergestellt sind.

Bevorzugt haben die erfindungsgemäßen Reiskleiewachsoxidate eine Nadelpenetrationszahl (NPZ) gemessen nach DIN 51579 (2010) von kleiner 10 mm$^{-1}$, bevorzugt kleiner 5 mm$^{-1}$, besonders bevorzugt kleiner 3 mm$^{-1}$.

Bevorzugt haben die erfindungsgemäßen Reiskleiewachsoxidate eine Nadelpenetrationszahl (NPZ) gemessen nach DIN 51579 von kleiner 10 mm$^{-1}$, bevorzugt kleiner 5 mm$^{-1}$, besonders bevorzugt kleiner 3 mm$^{-1}$.

Die erfindungsgemäßen teilverseiften Reiskleiewachsoxidate (V) zeichnen sich typischerweise durch einen Tropfpunkt (gemessen nach DIN ISO 2176 (1997) zwischen 80 °C und 160 °C, vorzugsweise zwischen 90 °C und 150 °C, besonders vorzugsweise zwischen 100 °C und 140 °C aus.

Des Weiteren haben die teilverseiften Reiskleiewachsoxidate (V) typischerweise eine besonders helle bis weiße Farbe. Diese lässt sich gemäß APCS Cc 13e 92 bestimmen (beispielsweise mit Lovibond ® Farbbestimmungsgeräten). Vorzugsweise haben die erfindungsgemäßen teilverseiften Reiskleiewachsoxidate (V) im CIE L*a*b* Farbraum L*-Werte zwischen 70 und 100, sowie a*-Werte von kleiner als 1,5 und b*-Werte von kleiner als 20. Besonders vorzugsweise haben die erfindungsgemäßen teilverseiften Reiskleiewachsoxidate (V) im CIEL*a*b* Farbraum L*-Werte zwischen 80 und 100, sowie a*-Werte von kleiner als 1,2 und b*-Werte von kleiner als 16.

Ferner weisen die erfindungsgemäßen teilverseiften Reiskleiewachsoxidate (V) hohe Thermostabilitäten aus. Typischerweise ist der Masseverlust der teilverseiften Reiskleiewachsoxidate, gemessen nach DIN 51006 (2005) bei Erreichen einer Temperatur von 300 °C (Heizrate von 5 °C/min) kleiner als 10%, bevorzugt kleiner als 5%.

Ebenfalls Gegenstand der Erfindung ist die Verwendung der erfindungsgemäßen teilverseiften Reiskleiewachsoxidate (V) zu land- oder forstwirtschaftlichen Zwecken, als Additiv in der Kunststoffverarbeitung, in Pflegemitteln, in Druckfarben und/oder in Lacken.

Die Erfindung wird durch die nachfolgenden Beispiele und Ansprüche näher erläutert.

Substanzcharakterisierung

Die in Tabelle 1 aufgeführten Standardmethoden, die auch in der Charakterisierung von Montanwachsen und Montanwachsderivaten angewandt werden, dienen zur Bestimmung der Kennzahlen von Reiskleiewachsen, Reiskleiewachsoxidaten und weiteren Derivaten der Reiskleiewachse.

Tabelle 1

|  | Methode |
|---|---|
| Säurezahl (SZ) [mg KOH/g] | ISO 2114 |
| Verseifungszahl (VZ) [mg KOH/g] | ISO 3681 |
| Tropfpunkt (TP) [°C] | ISO 2176 |
| Schmelzpunkt (SP) [°C] | DIN EN ISO 11357-1 |
| Schmelzenthalpie (SE) [J/g] | DIN EN ISO 11357-1 |
| Ölgehalt (ÖG) [Gew.-%] | AOCS Ja 4-46 |
| Thermogravimetrische Analyse (TGA) [Gew.-%] von 25 bis 300°C bei 5K/min, dann 30min bei 300 °C. Messung des Masseverlusts bei Erreichen von 300 °C und nach 30 min bei 300 °C | DIN 51006 |
| CIEL*a*b*-Farbwerte (mit Lovibond Farbmessgerät) | AOCS Cc 13e-92 |
| Ca-Gehalt [Gew.-%] (CaG) | DGF M-IV 4 |
| Nadelpenetrationszahl [mm$^{-1}$] (NPZ) | DIN 51579 |

Kettenlängenverteilungen

Die Kettenlängenverteilungen der Bestandteile der Reiskleiewachsoxidate wurden mittels Gaschromatographie bestimmt. Als Vergleichssubstanzen dienten Wachssäuren und Wachsalkohole mit Kohlenstoffkettenlängen zwischen C6 und C36. Wachsester mit C44 bis C58 wurden durch Kombination der Modellsubstanzen dargestellt. Um die Peaks der Gaschromatogramme der Reiskleiewachse zu identifizieren wurde zu einer Wachsprobe jeweils eine definierte Menge der einzelnen Komponenten zugegeben und eine deutliche Zunahme der Fläche des entsprechenden Peaks beobachtet. Die Messbedingungen sind in Tabelle 2 dargestellt.

Tabelle 2

| Säule | ZB-1 HT Phenomenex, Länge 15 m I.D. 0,25 mm, Film 0,1 μm |
|---|---|
| Detektor | 380°C FID |

(fortgesetzt)

| Injektor | 300°C Split 1:100 |
|---|---|
| Trägergas | Helium |
| Lösungsmittel | Toluol |
| Konzentration | 30mg/mL |
| Injektionsmenge | 1μl |
| Temperaturprogramm | 40 bis 380°C 5K/min; 10min bei 380°C halten |

Der Anteil an Metallsalzen von aliphatischen Carbonsäuren wurden berechnet gemäß folgender Formel:

Salze [Gew.-%] = (m(Säuren im Reiskleiewachsoxidat) − m(Säuren im verseiften Reiskleiewachsoxidat) + m (Metall))/m(Ansatz)

wobei m(Säuren im Reiskleiewachsoxidat) und m(Säuren im verseiften Reiskleiewachsoxidat) mittels Gaschromatographie ermittelt wurden,

m (Metall) gemäß DGF M-IV 4 ermittelt wurde und

m(Ansatz) der Masse des gesamten Ansatzes entspricht.

Als Rohstoff wurde ein Reiskleiewachs im Rohzustand (RBW 1) eingesetzt. Die Eigenschaften des Reiskleiewachses im Rohzustand sind in Tabelle 3 dargestellt.

Tabelle 3 (Methoden, Abkürzungen und Einheiten in Tabelle 1)

| Rohstoff | SZ | VZ | TP | SP | SE | Viskosität [mPa*s] bei 120 °C | ÖG | TGA |
|---|---|---|---|---|---|---|---|---|
| RBW 1 | 1,3 | 83 | 77 | 79 | -192 | 8 | 1,9 | 1,2 / 6,4 |

Beispiele 1 bis 9

In einem 3 L Reaktionsgefäß mit Rührer, Temperaturfühler, Tropftrichter und Rückflusskühler wurde die in Tabelle 4 angegebene Menge Chromtrioxid in Schwefelsäure (Konzentration: 100g $CrO_3$/L) vorgelegt und auf 100°C erwärmt. Anschließend wurde geschmolzenes (90 °C) Reiskleiewachs im Rohzustand portionsweise zugegeben. Die Temperatur des Reaktionsgemisches wurde auf 110°C eingestellt und 8 h mit ca. 200 U/min mit einem KPG-Rührer gerührt. Das Heizen sowie Rühren wurde eingestellt. Sobald sich die Phasen getrennt haben wurde die wässrige Phase abgetrennt.

Dieser Vorgang wurde in den Beispielen 5 bis 7 einmal, in Beispiel 8 zweimal (mit den jeweils angegebenen Mengen an Chromtrioxid in Schwefelsäure) wiederholt, wobei anstelle des Reiskleiewachses das Reiskleiewachsoxidat aus dem jeweils vorhergehenden Durchgang eingesetzt wurde.

Die organische Phase wurde durch Waschen mit einer wässrigen Lösung von Oxalsäure und Schwefelsäure und anschließend durch Waschen mit Wasser von Chromrückständen befreit, in warme Zentrifugengläser abgelassen und zentrifugiert. In einem 1 l Reaktionsgefäß mit Rührer, Temperaturfühler, Tropftrichter und Rückflusskühler wurde das entsprechende Reiskleiewachsoxidat unter Stickstoffatmosphäre aufgeschmolzen und mit der entsprechenden Menge $Ca(OH)_2$ (Beispiele 1 bis 8) oder wässrige NaOH (Beispiel 9; 9 g NaOH in 100 mL Wasser) versetzt.

Das Reaktionsgemisch wurde bis zum Erreichen der gewünschten Säurezahl gerührt und anschließend die Reaktionsmischung im heißen Zustand druckfiltriert. In Beispiel 9 wird die Reaktionsmischung zusätzlich im Vakuumtrockenschrank bis zur Massenkonstanz getrocknet (Beispiel 9).

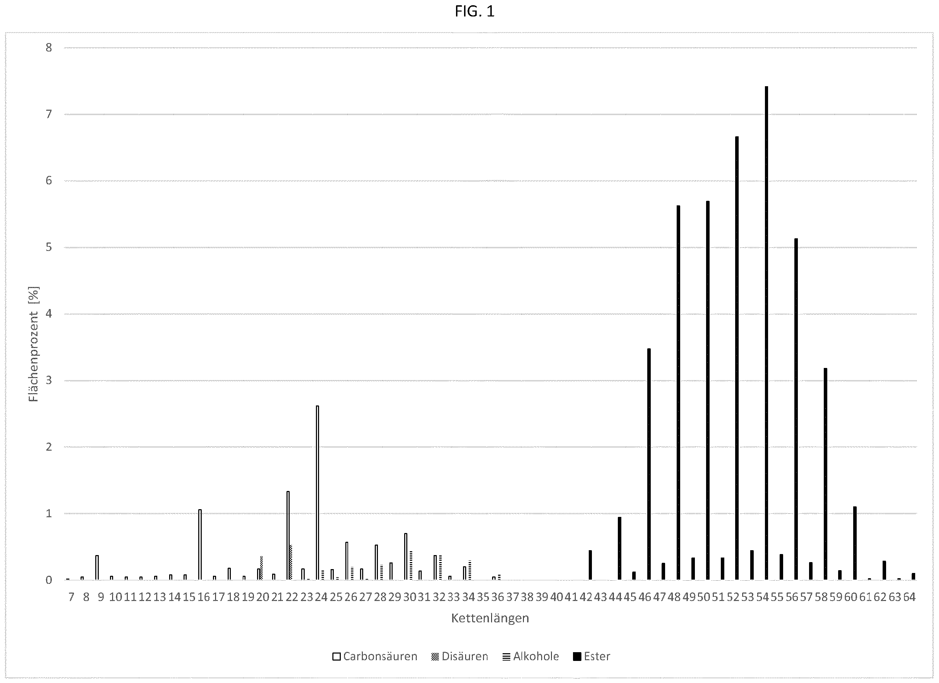

Die für Beispiel 2 gemessene Kettenlängenverteilung ist in Fig. 1 dargestellt.

Tabelle 4: (Methoden, Abkürzungen und Einheiten in Tabelle 1)

| Beispiel | 1 | 2 | 3 | 4 | 5 | 6 | 7 | 8 | 9 |
|---|---|---|---|---|---|---|---|---|---|
| RBW 1 | 100g | 100g | 100g | 100g | 100g | 100g | 100g | 100g | 100g |
| Oxidation | | | | | | | | | |
| $CrO_3/H_2SO_4$ | 1,2L | 1,5L | 1,5L | 1,5L | 1,0L 0,6L | 1,0L 0,6L | 1,0L 1,0L | 1,0L 0,8L 0,6L | 1,0L 0,8L 0,6L |
| Reaktionsdauer [h] | 8 | 8 | 8 | 8 | 8 8 | 8 8 | 8 8 | 8 8 8 | 8 8 8 |
| Reaktionstemperatur [°C] | 110 | 110 | 110 | 110 | 110 | 110 | 110 | 110 | 110 |
| SZ (Oxidat) | 45,7 | 51,2 | 51,2 | 51,2 | 71,1 | 71,1 | 89,6 | 123,9 | 123,9 |
| Verseifung | | | | | | | | | |
| $Ca(OH)_2$ | 5,1 g | 3,1 g | 3,7 g | 5,0 g | 5,0 g | 6,1 g | 8,9 g | 8,6 g | |
| NaOH | - | - | - | - | - | - | - | - | 9,0 g |
| Reaktionsdauer [h] | 2 | 2 | 2 | 4 | 3 | 4 | 6 | 1 | 1 |
| Reaktionstemperatur [°C] | 130 | 130 | 130 | 130 | 130 | 130 | 130 | 130 | 110 |
| SZ | 4,1 | 14,9 | 8,1 | 5,6 | 19,0 | 12,0 | 13,7 | 8,6 | 2,0 |
| VZ | 65 | 79 | 72 | 52 | 70 | 68 | 49 | 47 | 23 |
| TP | 103 | 108 | 111 | 120 | 106 | 140 | 135 | 133 | - |
| SP | 79,6 | 82,3 | 81,9 | 81,7 | 81,4 | 81,8 | 80,9 | 106,8 | 81,0 |
| SE | -162 | -209 | -208 | -200 | -197 | -194 | -186 | -173 | -186 |
| TGA | 2,30/7,76 | 4,37/7,98 | 1,66/5,09 | 1,45/4,88 | 2,31/5,34 | 3,39/12,55 | 6,86/19,23 | 3,01/8,45 | 2,54/7,31 |
| Viskosität [m Pas] Bei 120 °C | 42 | 48 | 880 | 1160 | 333 | 5447 | - | - | - |
| CIE L* | 89,24 | 93,50 | 91,68 | 86,60 | 91,18 | 90,94 | 86,20 | 83,1 | 94,55 |
| CIE a* | 0,95 | 0,68 | 0,64 | 0,75 | 0,48 | 0,32 | 1,08 | 0,90 | 0,46 |
| CIE b* | 9,37 | 4,20 | 4,39 | 12,24 | 6,83 | 4,98 | 11,47 | 15,40 | 12,16 |
| NPZ | 1 | 1 | 1 | 1 | 1 | 1 | 1 | 1 | 1 |

**Patentansprüche**

1.  Verfahren zur Herstellung eines teilverseiften Reiskleiewachsoxidats (V), umfassend die Schritte:

    i) Bereitstellen eines Reiskleiewachses (R), enthaltend weniger als 20 Gew.-%, bezogen auf das Gesamtgewicht des Reiskleiewachses (R), an mehrfachen Estern gebildet aus mehrwertigen Alkoholen und aliphatischen Carbonsäuren mit 8 bis 20 Kohlenstoffatomen;
    ii) Bereitstellen einer Mischung (M) aus Chromtrioxid und Schwefelsäure;
    iii) Durchführen der Oxidation des Reiskleiewachses (R) durch Umsetzung des Reiskleiwachses (R) mit der Mischung (M) unter Rühren und unter Rühren bei einer Temperatur von 90 bis 150 °C, um ein Reiskleiewachsoxidat (O) zu erhalten;
    iv) Beenden der Umsetzung und Ruhenlassen der in Schritt iii) erhaltenen Reaktionsmischung bis zur Trennung der organischen Phase von der wässrigen Phase;
    v) Abtrennung der organischen Phase;
    vi) optionales Entfernen von Rückständen enthaltend Chromverbindungen aus der organischen Phase, um das Reiskleiewachsoxidat (O) in gereinigter Form zu erhalten,
    vii) optionales Wiederholen der Folge von Schritten ii) bis vi), wobei anstelle des Reiskleiewachses (R) das Reiskleiewachsoxidat (O), gegebenenfalls in gereinigter Form, eingesetzt wird,
    viii) Verseifen des Reiskleiewachsoxidats (O), gegebenenfalls in gereinigter Form, durch Umsetzung mit einem basischen Salz, vorzugsweise einem basischen Metallsalz, insbesondere ausgewählt aus Alkalimetallhydroxiden und Erdalkalimetallhydroxiden,

    wobei der Reaktionsmischung in den Schritten iii) bis Schritt viii), vorzugsweise in allen Schritten des gesamten Verfahrens, keine Alkohol-Komponente zugegeben wird.

2.  Verfahren gemäß Anspruch 1, wobei die Oxidation in Schritt iii) über einen Zeitraum von 2 bis 9 Stunden durchgeführt wird.

3.  Verfahren gemäß Anspruch 1 oder 2, wobei die Folge der Schritte ii) bis vi) einmal bis viermal wiederholt wird, und wobei an Stelle des Reiskleiewachses (R) das in Schritt vii) oder gegebenenfalls viii) erhaltene Reiskleiewachsoxidat (O), gegebenenfalls in gereinigter Form, zugegeben wird.

4.  Verfahren gemäß mindestens einem der Ansprüche 1 bis 3, wobei das Gewichtsverhältnis von insgesamt eingesetztem Chromtrioxid zu eingesetztem Reiskleiewachs (R) von 1:1 bis 3:1, vorzugsweise von 1,1:1 bis 3:1 ist.

5.  Verfahren gemäß mindestens einem der Ansprüche 1 bis 4, wobei der Schritt des Entfernens von Rückständen enthaltend Chromverbindungen in Schritt vi) durchgeführt wird und das Waschen der organischen Phase mit einer wässrigen Lösung von Oxalsäure und/oder Schwefelsäure umfasst.

6.  Verfahren gemäß mindestens einem der Ansprüche 1 bis 5, wobei der Schritt des Entfernens von Rückständen enthaltend Chromverbindungen in Schritt vi) durchgeführt wird und das Waschen der organischen Phase mit Wasser umfasst.

7.  Verfahren gemäß mindestens einem der Ansprüche 1 bis 6, wobei der Schritt des Entfernens von Rückständen enthaltend Chromverbindungen in Schritt vi) durchgeführt wird und ein Zentrifugieren der organischen Phase umfasst.

8.  Verfahren gemäß mindestens einem der Ansprüche 1 bis 7, wobei die Konzentration von Chromtrioxid in der Mischung (M) von 50 bis 200 g/L beträgt.

9.  Verfahren gemäß mindestens einem der Ansprüche 1 bis 8, wobei die Rührgeschwindigkeit in Schritt iii) zwischen 100 und 500 U/min beträgt.

10. Verfahren gemäß mindestens einem der Ansprüche 1 bis 9, wobei das Verseifen in Schritt viii) über einen Zeitraum von 0,5 bis 10 h, vorzugsweise bei einer Temperatur von 90 bis 150 °C durchgeführt wird.

11. Verfahren gemäß mindestens einem der Ansprüche 1 bis 10, wobei der Reaktionsmischung in keinen der Schritte zusätzlichen Oxidationspromotoren zugesetzt werden.

12. Teilverseiftes Reiskleiewachsoxidat (V) umfassend folgende Komponenten:

a) 30 bis 85 Gew.-%, bezogen auf das Gesamtgewicht des teilverseiften Reiskleiewachsoxidats (V), genuine Ester mit 42 bis 64 Kohlenstoffatomen;

b) 0 bis 70 Gew.-%, vorzugsweise 10 bis 70 Gew.-%, bezogen auf das Gesamtgewicht des teilverseiften Reiskleiewachsoxidats (V), Salze von aliphatischen Carbonsäuren mit 8 bis 36 Kohlenstoffatomen; und

c) 0 bis 5 Gew.-%, insbesondere 0 bis 3 Gew.-%, bezogen auf das Gesamtgewicht des teilverseiften Reiskleiewachsoxidats (V), mehrfache Estern gebildet aus mehrwertigen Alkoholen und aliphatischen Carbonsäuren mit 22 bis 36 Kohlenstoffatomen.

13. Teilverseiftes Reiskleiewachsoxidat (V) gemäß Anspruch 12 umfassend folgende Komponenten:

a) 30 bis 85 Gew.-%, bezogen auf das Gesamtgewicht des teilverseiften Reiskleiewachsoxidats (V), genuine Ester mit 42 bis 64 Kohlenstoffatomen;

b) 10 bis 40 Gew.-%, bezogen auf das Gesamtgewicht des teilverseiften Reiskleiewachsoxidats (V), Salze von aliphatischen Carbonsäuren mit 8 bis 36 Kohlenstoffatomen;

c) 0 bis 5 Gew.-%, insbesondere 0 bis 3 Gew.-%, bezogen auf das Gesamtgewicht des teilverseiften Reiskleiewachsoxidats (V), mehrfache Estern gebildet aus mehrwertigen Alkoholen und aliphatischen Carbonsäuren mit 22 bis 36 Kohlenstoffatomen;

d) 5 bis 40 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;

e) 0 bis 10 Gew.-%, insbesondere 0,1 bis 5 Gew.-%, bezogen auf das Gesamtgewicht des teilverseiften Reiskleiewachsoxidats (V), freie aliphatische Alkohole mit 24 bis 36 Kohlenstoffatomen;

f) 0 bis 5 Gew.-%, insbesondere 0,1 bis 5 Gew.-%, bezogen auf das Gesamtgewicht des teilverseiften Reiskleiewachsoxidats (V), freie aliphatische Dicarbonsäuren mit 10 bis 30 Kohlenstoffatomen;

g) 0 bis 15 Gew.-%, insbesondere 0,1 bis 10 Gew.-%, bezogen auf das Gesamtgewicht des teilverseiften Reiskleiewachsoxidats (V), natürliche Bestandteile von Reiskleiewachs, die sich von a) bis f) unterscheiden

14. Teilverseiftes Reiskleiewachsoxidat (V) gemäß Anspruch 12 oder 13, hergestellt nach einem Verfahren gemäß mindestens einem der Ansprüche 1 bis 11.

15. Verwendung des teilverseiften Reiskleiewachsoxidats (V) gemäß mindestens einem der Ansprüche 12 bis 14 zu land- oder forstwirtschaftlichen Zwecken, als Additiv in der Kunststoffverarbeitung, in Pflegemitteln, in Druckfarben und/oder in Lacken.

FIG. 1

Europäisches Patentamt / European Patent Office / Office européen des brevets

## EUROPÄISCHER RECHERCHENBERICHT

Nummer der Anmeldung

EP 19 20 3444

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CHARLES W BUFFA: "RICE BRAN WAX. A NEW WAX FOR COSMETICS, DRUGS, AND TOILETRIES.", COSMETICS & TOILETRIES, Bd. 91, Nr. 10, 1. Januar 1976 (1976-01-01), Seiten 14-16, XP055658779, US ISSN: 0361-4387 * das ganze Dokument * ----- | 1-15 | INV. C08L91/06 |
| A | S. H Yoon ET AL: "Composition of waxes from crude rice bran oil", Journal of the American Oil Chemists' Society, 1. Dezember 1982 (1982-12-01), Seiten 561-563, XP055658981, Berlin/Heidelberg DOI: 10.1007/BF02636324 Gefunden im Internet: URL:https://link.springer.com/article/10.1007/BF02636324 * das ganze Dokument * ----- | 1-15 | |
| A | Junghong Kim: "Wax extraction and characterization from full-fat and defatted rice bran (Thesis)", , 1. Januar 2008 (2008-01-01), Seiten 1-136, XP055659292, Louisiana, USA Gefunden im Internet: URL:https://digitalcommons.lsu.edu/gradschool_dissertations/886 [gefunden am 2020-01-20] * das ganze Dokument * ----- -/-- | 1-15 | |

RECHERCHIERTE SACHGEBIETE (IPC)

C08L

Der vorliegende Recherchenbericht wurde für alle Patentansprüche erstellt

| Recherchenort | Abschlußdatum der Recherche | Prüfer |
|---|---|---|
| München | 20. Januar 2020 | olde Scheper, Bernd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

Seite 1 von 3

**EUROPÄISCHER RECHERCHENBERICHT**

Nummer der Anmeldung

EP 19 20 3444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | AVISH D MARU ET AL: "Studies on Physico-Chemical Properties of Rice Bran Wax and its Comparison with Carnauba Wax", INTERNATIONAL JOURNAL OF PHARMACEUTICAL AND PHYTOPHARMACOLOGICAL RESEARCH, Bd. 203, Nr. 1, 1. Januar 2012 (2012-01-01), Seiten 203-207, XP055658816, ISSN: 2250-1029 * Tabelle 1 * * das ganze Dokument * | 1-15 | |
| A | PANOTH ABHIRAMI ET AL: "Characterization of Refined Rice Bran Wax: An Alternative Edible Coating", INTERNATIONAL JOURNAL OF CURRENT MICROBIOLOGY AND APPLIED SCIENCES, Bd. 8, Nr. 05, 10. Mai 2019 (2019-05-10), Seiten 91-97, XP055658819, ISSN: 2319-7692, DOI: 10.20546/ijcmas.2019.805.012 * Seite 92 * | 1-15 | |
| A,D | WO 2014/060081 A1 (CLARIANT INT LTD [CH]) 24. April 2014 (2014-04-24) * das ganze Dokument * | 1-15 | |
| A,D | WO 2014/060082 A1 (CLARIANT INT LTD [CH]) 24. April 2014 (2014-04-24) * das ganze Dokument * | 1-15 | |
| A | WO 2014/131514 A1 (CLARIANT INT LTD [CH]) 4. September 2014 (2014-09-04) * Anspruch 1 * * das ganze Dokument * | 1-15 | |

RECHERCHIERTE SACHGEBIETE (IPC)

-/--

Der vorliegende Recherchenbericht wurde für alle Patentansprüche erstellt

| Recherchenort | Abschlußdatum der Recherche | Prüfer |
|---|---|---|
| München | 20. Januar 2020 | olde Scheper, Bernd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................
& : Mitglied der gleichen Patentfamilie, übereinstimmendes Dokument

EPO FORM 1503 03.82 (P04C03)

Seite 2 von 3

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2014/166614 A1 (CLARIANT INT LTD [CH]) 16. Oktober 2014 (2014-10-16) * Anspruch 1 * * das ganze Dokument * ----- | 1-15 | |
| A | WO 2017/108542 A1 (CLARIANT INT LTD [CH]) 29. Juni 2017 (2017-06-29) * Anspruch 1 * * das ganze Dokument * ----- | 1-15 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 20. Januar 2020 | olde Scheper, Bernd |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

Seite 3 von 3

**ANHANG ZUM EUROPÄISCHEN RECHERCHENBERICHT**
**ÜBER DIE EUROPÄISCHE PATENTANMELDUNG NR.**

EP 19 20 3444

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2020

| Im Recherchenbericht angeführtes Patentdokument | Datum der Veröffentlichung | Mitglied(er) der Patentfamilie | Datum der Veröffentlichung |
|---|---|---|---|
| WO 2014060081 A1 | 24-04-2014 | BR 112015008275 A2 | 04-07-2017 |
| | | CN 104619781 A | 13-05-2015 |
| | | EP 2909274 A1 | 26-08-2015 |
| | | ES 2607146 T3 | 29-03-2017 |
| | | JP 6371291 B2 | 08-08-2018 |
| | | JP 2015536356 A | 21-12-2015 |
| | | KR 20150076219 A | 06-07-2015 |
| | | MX 345147 B | 17-01-2017 |
| | | US 2015284661 A1 | 08-10-2015 |
| | | WO 2014060081 A1 | 24-04-2014 |
| WO 2014060082 A1 | 24-04-2014 | BR 112015006768 A2 | 04-07-2017 |
| | | CN 104640930 A | 20-05-2015 |
| | | EP 2909273 A1 | 26-08-2015 |
| | | ES 2602279 T3 | 20-02-2017 |
| | | JP 6371292 B2 | 08-08-2018 |
| | | JP 2016500054 A | 07-01-2016 |
| | | KR 20150076218 A | 06-07-2015 |
| | | MX 347115 B | 11-04-2017 |
| | | US 2015247039 A1 | 03-09-2015 |
| | | WO 2014060082 A1 | 24-04-2014 |
| WO 2014131514 A1 | 04-09-2014 | DE 102013003366 A1 | 04-09-2014 |
| | | WO 2014131514 A1 | 04-09-2014 |
| WO 2014166614 A1 | 16-10-2014 | BR 112015024619 A2 | 18-07-2017 |
| | | CL 2015003010 A1 | 13-05-2016 |
| | | CN 105102528 A | 25-11-2015 |
| | | DE 102013006347 A1 | 16-10-2014 |
| | | EP 2984136 A1 | 17-02-2016 |
| | | JP 2016514758 A | 23-05-2016 |
| | | KR 20150143709 A | 23-12-2015 |
| | | SG 11201508335U A | 27-11-2015 |
| | | US 2016060463 A1 | 03-03-2016 |
| | | WO 2014166614 A1 | 16-10-2014 |
| | | ZA 201506451 B | 25-01-2017 |
| WO 2017108542 A1 | 29-06-2017 | DE 102015226240 A1 | 22-06-2017 |
| | | WO 2017108542 A1 | 29-06-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 10231886 A
- EP 1343454 A
- JP H10007862 A
- JP S60011553 A
- JP S49090739 A
- JP 2010020304 A
- CN 108191602 A
- EP 2909273 A
- EP 2909274 A
- JP S36005526 B

**In der Beschreibung aufgeführte Nicht-Patentliteratur**

- *Journal of Scientific & Industrial Research,* 2005, vol. 64, 866-882
- Ullmann's Encyclopedia of Industrial Chemistry. 1996, vol. A28, 117
- **BRÄUTIGAM.** Lexikon der kosmetischen Rohstoffe. *Lexikon der kosmetischen Rohstoffe, Norderstedt,* 2010, 77